# EUROPEAN PATENT SPECIFICATION

(11) **EP 0 880 877 B1**
(45) Date of publication and mention of the grant of the patent: **22.05.2002**
(21) Application number: 98100192.8
(22) Date of filing: 08.01.1998
(51) Int. Cl.: A01C 17/00

(54) **Method of spreading flowable material, apparatus for use in carrying out the method, and spreader vane for use in the apparatus**
Verfahren um fliessendes Gut zu streuen, Vorrichtung für dieses Verfahren, und Wurfschaufel für diesen Streuer
Méthode d'épandage pour matériaux fluides, appareil pour exécuter cette méthode, et pale ejecteur utilisé dans cet appareil

(30) Priority: 30.04.1997 DK 48297
(43) Date of publication of application: 02.12.1998
(73) Proprietor: A.P. Laursen A/S, DK-7171 Uldum (DK)
(72) Inventor: Iversen, Morten Dall, 6000 Kolding (DK); Laursen, Nils Jorn, 8722 Hedensted (DK)
(74) Representative: Roerboel, Leif

(56) References cited:
- EP-A- 0 192 085
- DE-A- 3 812 087
- FR-A- 2 496 390

## Description

### FIELD OF THE INVENTION

The present invention relates to a method of spreading flowable material, such as set forth in more detail in the preamble of claim 1.

### BACKGROUND ART

A method of this kind is disclosed in the French patent application FR 2496390A. The Danish patent application No. 1122/96 (B, S & Co. ref. 56339) describes how the spreading pattern can be changed, e.g. with a view to be able to pass along a field boundary or a watercourse without spreading e.g. manure beyond certain limits, by using a spreading apparatus with two disks and making these disks rotate in the same or opposite sense in different directions, and possibly blocking the supply of spreadable material to one of the disks.

### DISCLOSURE OF THE INVENTION

On this background, it is the object of the present invention to provide a method of the kind referred to initially, with which it is possible to influence the spreading pattern to a greater degree, and this object is achieved by proceeding in the manner set forth in the characterizing clause of claim 1. By so doing, it is possible to change the velocity and hence the kinetic energy, with which the material is spread out, by merely changing the sense of rotation of the spreader disk or disks concerned.

The present invention also relates to an apparatus for carrying out the method of the invention. This apparatus is of the kind set forth in the preamble of claim 3, and according to the invention, this apparatus is characterized by the construction and arrangement set forth in the characterizing clause of this claim 3.

Finally, the present invention relates to a spreader vane for use in the apparatus mentioned above. This spreader vane is of the kind set forth in the preamble of claim 8, and according to the invention, this spreader vane is characterized by a construction as set forth in the characterizing clause of this claim 8.

Advantageous embodiments of the method and the apparatus, the effects of which will be evident from the following detailed part of the present description, are set forth in claim 2 and claims 4-7, respectively.

### BRIEF DESCRIPTION OF THE DRAWINGS

The present invention will be explained below with reference to the drawings, showing an exemplary embodiment of a spreading apparatus according to the invention, of which solely the parts necessary for the understanding of the invention are shown, whereas
Figure 1 shows in perspective as viewed at a skew angle from above a spreader disk, to which two spreader vanes according to the invention are secured,
Figure 2 is a top view of one of the spreader vanes shown in Figure 1,
Figure 3 shows the spreader vane shown in Figure 2 with two possible flow paths for the flowable material drawn in,
Figure 4 is a top view of parts of an apparatus according to the invention, and
Figures 5 and 6 show the apparatus shown in Figure 4 in two different operating states.

### DESCRIPTION OF THE PREFERRED EMBODIMENT

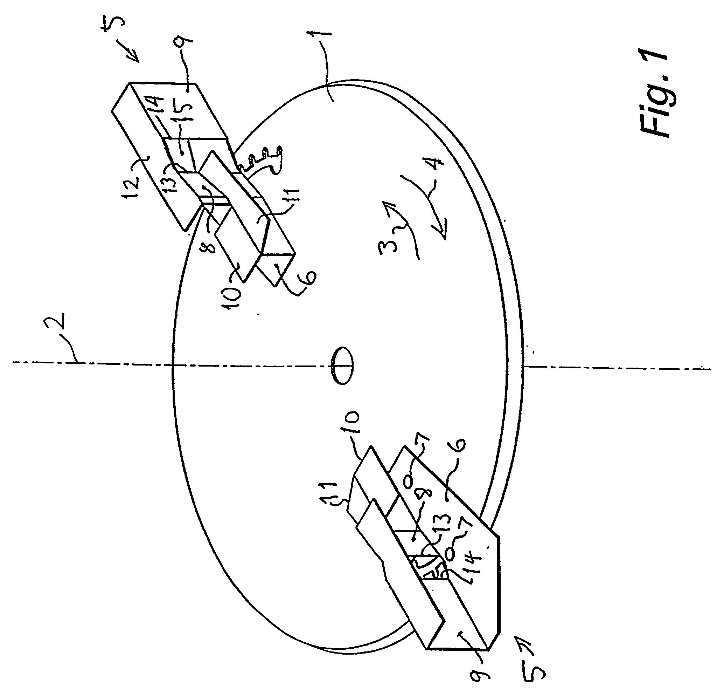

Figure 1 shows a dish-shaped spreader disk 1 adapted to rotate about an axis 2, being generally vertical during operation, in a first sense 3 or in a second and oppposite sense 4, such as will be explained in more detail below.

The spreader disk 1 carries two spreader vanes 5, each consisting of
- a footpiece 6, in a known manner adjustably secured to and co-planar with the disk 1 by means of
- bolts or studs 7,
- an active spreader part 8, 9 lying in or forming a small angle with a meridian plane through the axis 2 and hence forming a right angle with the disk 1, as well as
- guiding and stiffening plates 10, 11 and 12, extending parallel to and in different distances from the disk 1.

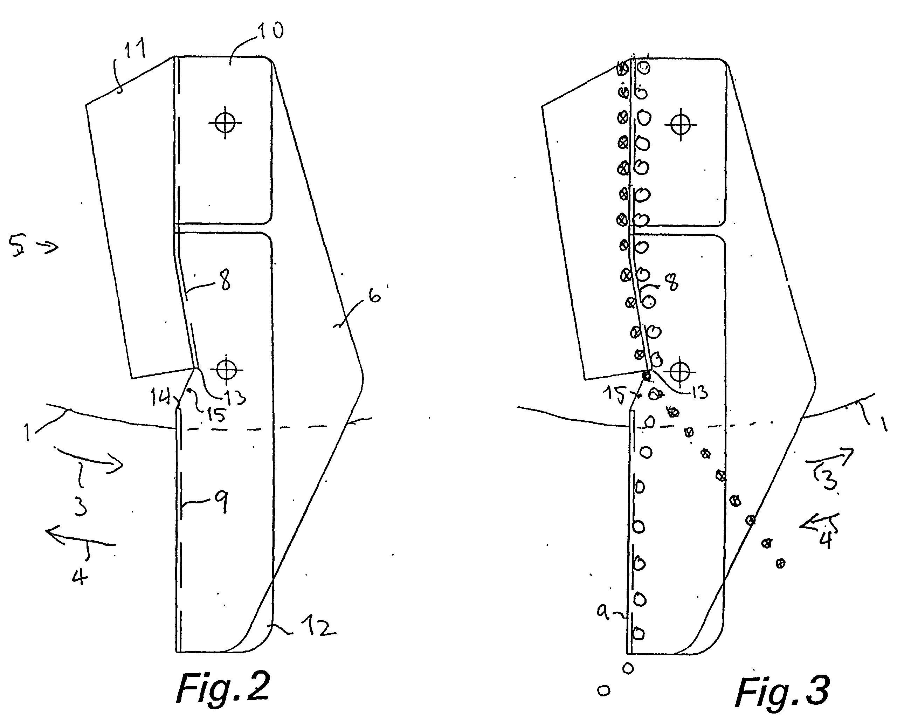

The special feature of the spreader vanes 5 according to the present invention consists in that the active spreader part 8, 9 is divided into two parts, viz. a radially inner part 8 and a radially outer part 9, and in that the radially outer end 13 of the radially inner part 8 is offset in the radial and tangential directions relative to the radially inner end 14 of the radially outer part 9, so that, cf. also Figures 2 and 3, a gap 15, extending parallel to the axis 2 of rotation, is formed between said ends 13 and 14.

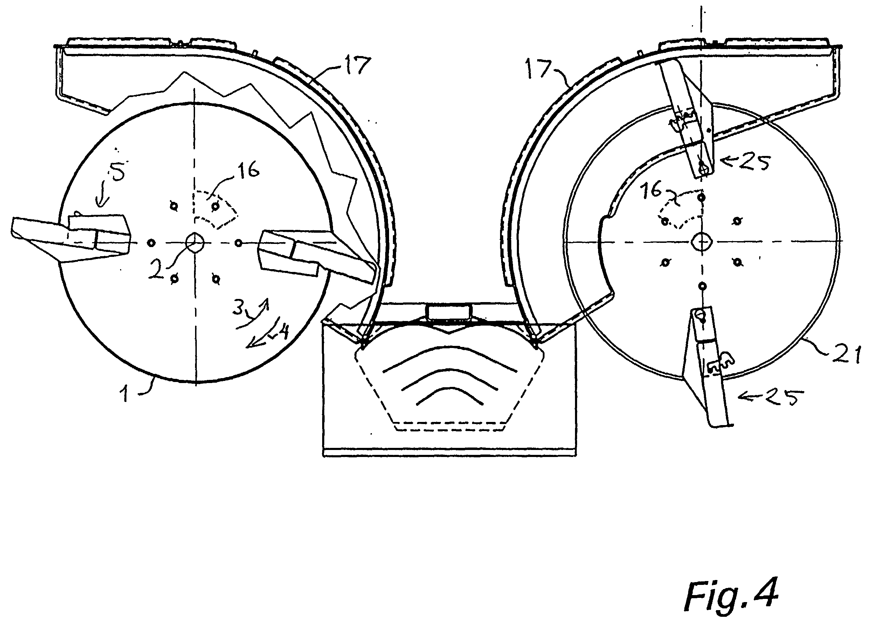

As mentioned, Figure 4 shows a part of a spreading apparatus according to the present invention, in which at least the spreader disk 1 situated to the left carries spreader vanes 5 of the construction described above, whereas the spreader disk 21 situated to the right in the example shown carries spreader vanes 25 of a previously known type.

Above the two spreader disks 1 and 21 there is placed in a known manner a container (not shown) for flowable material, e.g. manure in the form of granules, likewise in a known manner falling down through suitable openings 16 in the bottom of said container, as mentioned otherwise not shown.

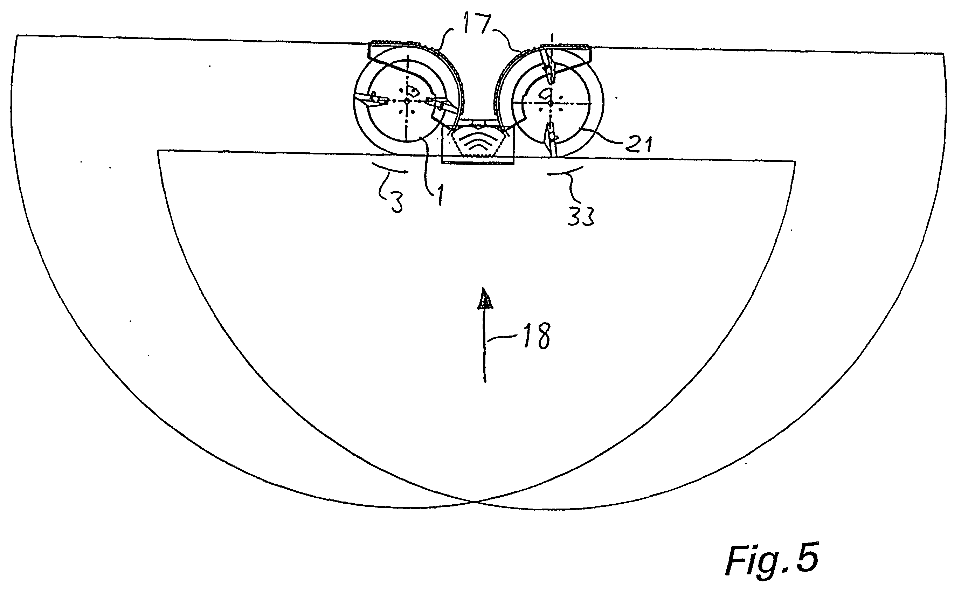

Likewise in a known manner, the material is thrown outwards by the centrifugal force, presumably assisted by the air current created by the spreader vanes 5 and 25, until it is intercepted by the vanes and thrown further outwardly from the disks 1 and 21 in spreading patterns as indicated in Figure 5, the forwardmost limit of which is determined by fixed guards 17, while the limits to the sides and the rear are determined by the throwing distance, the latter again depending on *inter alia* at which velocity the material leaves the spreader vanes 5 and 25.

In the normal operating state shown in Figure 5, the disk 1 rotates in the sense 3, while the disk 21 rotates in the opposite sense 33. The path of movement, through which the material is assumed to travel when passing the spreader vanes 5, is in Figure 3 indicated by empty circles O - at this point it should be emphasized that during this process, both the vanes 5 and the material also moves tangentially corresponding to the normal rotational sense 3 for the disk 1. As it will be appreciated, the material "jumps" across the gap 15 and continues along the radially outer part 9, at which additional kinetic energy is imparted to it - i.e. its velocity is increased - all the way out to the extreme end of this part.

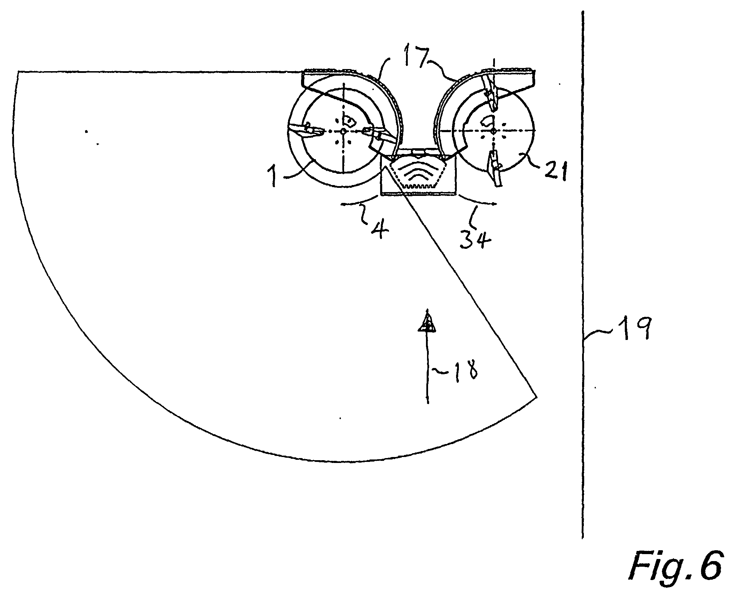

In certain situations it may be necessary to limit the spreading pattern to one or the other side of the apparatus while it is being moved forward in the direction 18, e.g. carried by a tractor. Figure 6 shows such a situation, in which the material must not be spread beyond a symbolically indicated field boundary 19. To this end, the supply to the spreader disk 21 is blocked, and the spreader disks are made to rotate in the opposite senses 4 and 34, respectively, i.e. oppositely to the normal rotational senses 3 and 33. In this operational state, the material, this time symbolized by "filled" circles ⊕, will "fall down" from the radially inner part 8 through the gap 15, and thus receive considerably less kinetic energy - i.e. be given a considerably lower velocity - than in the operational state shown in Figure 5. This results in part in a decrease in the throwing distance, in part in that the fixed guide 17 associated with the disk 1 causes a cutting-off of the spreading pattern at its rear end, so that this pattern is kept clear of the field boundary 19.

In the example described, the spreader disk 21 situated to the right is equipped with spreader vanes 25 of a previously known type, i.e. without the gap 15, but it lies within the scope of the present invention to provide even this disk 21 with spreader vanes 5 according to the invention. In that case it is possible to "mirror" the situation shown in Figure 6 by blocking the supply to the left-hand disk 1 and let the right-hand disk 21 spread the material in the same manner, but in a mirror image of the pattern for the disk 1 shown in Figure 6.

In order to facilitate control, the manually operated cable or rod connections, possibly also hydraulically assisted remote-control means (not shown), may be common to the means determining the rotational sense of the spreader disks and the means blocking one or the other of the outlet openings 16, all in such a manner, that when a spreader disk rotates "backwards", i.e. in the sense 4 or 34, the outlet opening 16 associated with the control means will be blocked. In this case it is possible to utilize adjustable screens or guides (not shown), e.g. of the type known from EP-A2-0.699.377, and let the common remote-control means act upon these screens or guides as well, all in such a manner that a limiting screen or guide will stop material not having been caught by the fixed guides 17. The effect of this is that "stray" material will not be thrown out across the field boundary 19, but will instead hit the screen or guide and fall vertically downwards.

### LIST OF PARTS

- 1: spreader disk
- 2: axis
- 3: first sense (direction)
- 4: second sense (direction)
- 5: spreader vane
- 6: footpiece
- 7: bolts/studs

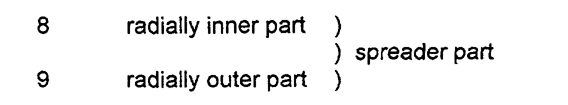

- 10: guiding and stiffening plate
- 11: guiding and stiffening plate
- 12: guiding and stiffening plate
- 13: radially outer end (of 8)
- 14: radially inner end (of 9)
- 15: gap
- 16: opening
- 17: fixed guard
- 18: direction
- 19: field boundary
- 21: spreader disk
- 25: spreader vane
- 33: sense (direction)
- 34: sense (direction)

## Claims

1. Method of spreading flowable material using at least one spreader disk on its upper side provided with at least one generally radially extending spreader vane, said spreader disk rotating in either a first or a second, opposite sense or direction about a generally vertical axis and receiving the flowable material from above, throwing said material out beyond its peripheral edge by means of said spreader vane or vanes, **characterized by** the use of at least one spreader vane so adapted that when the spreader disk rotates in said first sense or direction, its engagement with the flowable material ceases at a first radial distance from the rotational axis of the spreader disk, while when the spreader disk rotates in said second, opposite sense or direction, its engagement with the flowable material ceases at a second radial distance from the rotational axis of the spreader disk, said second distance being different from said first distance.

2. Method according to claim 1 and with the use of one or a number of spreader vanes, each comprising a base part, with which it is secured, possibly adjustably, to a spreader disk, and a spreader part protruding upwardly from the base part and having a not inconsiderable extent in the axial and radial directions, **characterized by** the use of at least one spreader vane, in which the spreader part comprises a radially inner part and a radially outer part, the radially outer end of the radially inner part being offset in such a manner in the radial and tangential direction relative to the radially inner end of the radially outer part, that between them there is formed an opening, through which the flowable material can pass.

3. Apparatus for carrying out the method according to claim 1 or 2 by spreading flowable material and comprising
a) at least one container for flowable material and comprising at least one outlet opening (16) for the material,
b) situated below at least one of said outlet openings (16) a spreader disk (1) adapted to rotate about a generally vertical axis (2) in either a first sense or direction or in a second, opposite sense or direction, and
c) at least one spreader vane (5) secured to the upper side of each spreader disk and comprising
c1) a base part (6), by which it is secured, possibly adjustably, to the spreader disk, and
c2) a spreader part (8,9) protruding upwardly from the base part (6) and having a not inconsiderable extent in the axial and radial directions,
**characterized in**
d) that at least one spreader vane (5) comprises a spreader part (8,9) having a radially inner part (8) and a radially outer part (9), the radially outer end (13) of the radially inner part (8) being offset in such a manner in the radial and tangential direction relative to the radially inner end (14) of the radially outer part (9), that between them there is formed an opening (15), through which the flowable material can pass.

4. Apparatus according to claim 3, **characterized in that** said radially inner (8) and outer (9) parts are mutually offset in the tangential direction to such a degree that when the spreader disk rotates in a sense or direction, in which the radially inner part (8) is forwardmost, no more than an insignificant proportion of the flowable material will come into contact with the radially outer part (9).

5. Apparatus according to claim 3 or 4, **characterized by** means for selectively blocking at least one outlet opening (16).

6. Apparatus according to claim 5, **characterized by** common remote-control means to act upon the rotational sense or direction of the spreader disk or disks (1,21) and the means for blocking the outlet opening or openings (16) in such a manner, that when the rotational sense of a spreader disk is such that the radially inner spreader part (8) is rearwardmost, then the associated outlet opening (16) will be blocked.

7. Apparatus according to claim 6 and of the kind comprising at least one limiting screen or guard movable between an active position, in which it constitutes an obstruction for at least a part of the material being thrown out from a spreader disk, and a passive position, in which it does not constitute such an obstruction, **characterized in that** the common remote-control means are also adapted to move the limiting screen or screens or guard or guards between said two positions in such a manner, that when the rotational sense or direction of the associated spreader disk is that mentioned in claim 6, then the associated limting screen or guard will be in said active position.

8. Spreader vane (5) for use in an apparatus according to any one or any of the claims 3-7 and of the kind comprising
a) a base part (6), by which it can be secured to a spreader disk (1,21) in the apparatus, and
b) a spreader part (8,9) protruding upward from the base part (6) during operation and having a not inconsiderable extent in the axial and tangential directions,
**characterized in**
c) that the spreader part (8,9) comprises a radially inner part (8) and a radially outer part (9), the radially outer end (13) of the radially inner part (8) being offset in such a manner in the radial and tangential direction relative to the radially inner end (14) of the radially outer part (9), that between them there is formed an opening (15), through which the flowable material can pass.

## Patentansprüche

1. Verfahren, um fließbares Gut zu streuen, wobei mindestens eine Streuscheibe verwendet wird, die auf ihrer oberen Seite mindestens mit einer sich im wesentlichen radial erstreckenden Wurfschaufel versehen ist, wobei sich die Streuscheibe entweder in der einen oder anderen, entgegengesetzten Orientierung bzw. Richtung um eine im wesentlichen vertikal verlaufenden Achse dreht und das fließbare Gut von oben erhält, wobei sie mit der Wurfschaufel oder den Wurfschaufeln dieses Gut über ihren äußeren Rand hinausbefördert, **dadurch gekennzeichnet, daß** durch Benutzung mindestens einer Wurfschaufel, die geeignet ist, daß, wenn sich die Streuscheibe in der einen Richtung dreht, ihr Eingriff mit dem fließbaren Gut in einer ersten radialen Entfernung von der Drehachse der Streuscheibe aufhört bzw. getrennt wird, während, wenn sich die Streuscheibe in der zweiten, entgegengesetzten Orientierung bzw. Richtung dreht, ihr Eingriff mit dem fließbaren Gut in einer zweiten radialen Entfernung von der Drehachse der Streuscheibe aufhört bzw. getrennt wird, wobei sich die zweite Entfernung von der ersten unterscheidet.

2. Verfahren nach Anspruch 1 und mit der Verwendung einer oder mehrerer Wurfschaufeln, wobei jede ein Basisteil aufweist, mit dem sie gegebenenfalls anpaßbar an einer Streuscheibe gesichert werden kann, und ein Streuteil, das sich vom Basisteil gesehen nach oben erstreckt und das ein nicht unerhebliches Ausmaß in axialer und radialer Richtung hat, **dadurch gekennzeichnet, daß** durch Verwendung mindestens einer Wurfschaufel, in welcher der Streuteil ein radial inneres Teil und ein radial äußeres Teil aufweist, wobei das radial äußere Ende des radial inneren Teils so in radialer und tangentialer Richtung gesehen relativ zu dem radial inneren Ende des radial äußeren Teils versetzt ist, daß zwischen ihnen eine Öffnung entsteht, durch die das fließbare Gut passieren kann.

3. Vorrichtung zur Ausführung eines Verfahrens nach Anspruch 1 oder 2 durch Streuung fließbaren Gutes, aufweisend
a) mindestens einen Behälter für fließbares Gut und mindestens aufweisend eine Auslaßöffnung (16) für das Gut,
b) Streuscheibe (1), angebracht unter mindestens einer dieser Auslaßöffnungen (16), zur Drehung um eine im wesentlichen vertikal verlaufende Achse (2) entweder in der einen oder in der anderen, entgegengesetzt verlaufenden Orientierung bzw. Richtung, und
c) mindestens eine Wurfschaufel (5), abgesichert zur oberen Seite jeder Streuscheibe hin, aufweisend
c1) ein Basisteil (6), von dem sie gegebenenfalls anpaßbar an der Streuscheibe gesichert ist, und
c2) ein Streuteil (8, 9), das sich vom Basisteil (6) gesehen nach oben erstreckt und das ein nicht unerhebliches Ausmaß in axialer und radialer Richtung hat,
**gekennzeichnet dadurch, daß**
d) mindestens eine Wurfschaufel (5) ein Streuteil (8, 9) aufweist, das ein radial inneres Teil (8) und ein radial äußeres Teil (9) hat, wobei das radial äußere Ende (13) des radial inneren Teils (8) so in radialer und tangentialer Richtung gesehen relativ zu dem radial inneren Ende des äußeren Teils versetzt ist, daß zwischen ihnen eine Öffnung (15) entsteht, durch die das fließbare Gut passieren kann.

4. Vorrichtung nach Anspruch 3, **gekennzeichnet dadurch, daß** radial innere (8) und äußere (9) Teile gegenseitig in tangential verlaufender Richtung derart versetzt sind, daß, wenn sich die Streuscheibe in der einen Orientierung bzw. Richtung dreht, in welcher das radial innere Teil (8) am weitesten vorangesetzt ist, nicht mehr als ein unerheblicher Teil des fließbaren Gutes in Verbindung mit dem radial äußeren Teil (9) kommen wird.

5. Vorrichtung nach Anspruch 3 oder 4, **gekennzeichnet durch** eine Einrichtung, die mindestens eine Auslaßöffnung (16) selektiv blockiert.

6. Vorrichtung nach Anspruch 5, **gekennzeichnet durch** gewöhnliche Fernsteuermittel, die auf den Drehsinn oder die Drehrichtung der Streuscheibe oder Streuscheiben (1, 21) wirken und eine Einrichtung zum Blockieren einer oder mehrerer Auslaßöffnungen (16) in einer Weise, daß, wenn der Drehsinn der Streuscheibe so ist, daß das radial innere Teil (8) am meisten zurückgesetzt ist, die zugeordnete Auslaßöffnung (16) blockiert wird.

7. Vorrichtung nach Anspruch 6 und von der Art, daß mindestens ein begrenzendes Raster oder eine Schutzvorrichtung zwischen einer aktiven Position, in welcher es/sie ein Hindernis für mindestens einen Teil des Gutes enthält, das aus der Streuscheibe hinaus befördert wird, und einer passiven Position bewegbar ist, in welcher es/sie nicht ein solches Hindernis enthält, **gekennzeichnet dadurch, daß** die gewöhnlichen Fernsteuermittel ebenso anwendbar sind, um das begrenzende Raster oder die Raster oder die Schutzvorrichtung oder die Schutzvorrichtungen zwischen diesen zwei Positionen in solch einer Weise zu bewegen, daß, wenn der Drehsinn oder die Drehrichtung der zugeordneten Streuscheibe, wie in Anspruch 6 beschrieben ist, das zugeordnete, begrenzende Raster oder die Schutzvorrichtung in die aktive Position gesetzt wird.

8. Wurfschaufel (5) für die Vorrichtung nach einem oder mehreren der Ansprüche 3-7 und von der Art, aufweisend
a) ein Basisteil (6), durch das sie an eine Streuscheibe (1, 21) in der Vorrichtung gesichert werden kann,
b) ein Streuteil (8, 9), das sich während des Betriebs vom Basisteil (6) gesehen nach oben erstreckt und das ein nicht unerhebliches Ausmaß in axialer und tangentialer Richtung hat,
**gekennzeichnet durch**
c) ein Streuteil (8, 9), das ein radial inneres Teil (8) und ein radial äußeres Teil (9) aufweist, wobei das radial äußere Ende (13) des radial inneren Teils (8) so in radialer und tangentialer Richtung gesehen relativ zu dem radial inneren Ende (14) des radial äußeren Teils versetzt ist, daß dort zwischen ihnen eine Öffnung (15) entsteht, **durch** die das fließbare Gut passieren kann.

## Revendications

1. Procédé d'épandage pour matériau fluide en utilisant au moins disque d'épandage doté sur sa face supérieure d'au moins une pale d'épandage qui s'étend généralement radialement, ledit disque d'épandage tournant soit dans un premier sens ou première direction soit dans un deuxième sens ou deuxième direction opposé(e) autour d'un axe généralement vertical et recevant le matériau fluide depuis le dessus, en projetant ledit matériau vers l'extérieur au-delà de sa bordure périphérique au moyen de ladite ou desdites pale(s) d'épandage, **caractérisé en ce qu'**on utilise au moins une pale d'épandage adaptée de telle manière que lorsque le disque d'épandage tourne dans le premier sens ou la première direction, son engagement avec le matériau fluide cesse à une première distance radiale depuis l'axe de rotation du disque d'épandage, tandis que lorsque le disque d'épandage tourne dans ledit deuxième sens ou ladite deuxième direction opposé(e), son engagement avec le matériau fluide cesse à une deuxième distance radiale depuis l'axe de rotation du disque d'épandage, ladite deuxième distance étant différente de ladite première distance.

2. Procédé selon la revendication 1, dans lequel on utilise une ou un certain nombre de pales d'épandage, chacune comprenant une partie de base au moyen de laquelle elle est fixée, éventuellement de façon ajustable, à un disque d'épandage, et une partie d'épandage qui se projette vers le haut depuis la partie de base et présentant une étendue qui n'est pas inconsidérable dans la direction axiale et dans la direction radiale, **caractérisé en ce qu'**on utilise au moins une pale d'épandage dans laquelle la partie d'épandage comprend une partie radialement intérieure et une partie radialement extérieure, l'extrémité radialement extérieure de la partie radialement intérieure étant décalée de telle manière, dans la direction radiale et dans la direction tangentielle par rapport à l'extrémité radialement intérieure de la partie radialement extérieure, qu'il se forme entre elles une ouverture à travers laquelle le matériau fluide peut passer.

3. Appareil pour mettre en oeuvre le procédé selon l'une ou l'autre des revendications 1 et 2 à l'épandage de matériau fluide et comprenant :
a) au moins un conteneur pour matériau fluide et comprenant au moins une ouverture de sortie (16) pour le matériau,
b) en situation au-dessous de l'une au moins desdites ouvertures de sortie (16), un disque d'épandage (1) adapté à tourner autour d'un axe généralement vertical (2) soit dans un premier sens ou première direction soit dans un deuxième sens ou deuxième direction opposé(e), et
c) au moins une pale d'épandage (5) fixée sur le côté supérieur de chaque disque d'épandage et comprenant :
c1) une partie de base (6) au moyen de laquelle elle est fixée, éventuellement de manière ajustable, sur le disque d'épandage, et
c2) une partie d'épandage (8, 9) qui se projette depuis le haut depuis la partie de base (6) et présentant une étendue qui n'est pas inconsidérable dans la direction radiale et dans la direction axiale,
**caractérisé en ce que** :
d) au moins une pale d'épandage (5) comprend une partie d'épandage (8, 9) ayant une partie radialement intérieure (8) et une partie radialement extérieure (9), l'extrémité radialement extérieure (13) de la partie radialement intérieure (8) étant décalée de telle manière, dans la direction radiale et dans la direction tangentielle par rapport à l'extrémité radialement intérieure (14) de la partie radialement extérieure (9), qu'il se forme entre elles une ouverture (15) à travers laquelle le matériau fluide peut passer.

4. Appareil selon la revendication 3, **caractérisé en ce que** ladite partie radialement intérieure (8) et ladite partie radialement extérieure (9) sont mutuellement décalées dans la direction tangentielle, à un degré tel que lorsque le disque d'épandage tourne dans un sens sous une direction dans laquelle la partie radialement intérieure (8) est tout à fait à l'avant, pas plus d'une proportion insignifiante du matériau fluide va venir en contact avec la partie radialement extérieure (9).

5. Appareil selon l'une ou l'autre des revendications 3 et 4, **caractérisé par** des moyens pour bloquer sélectivement au moins une ouverture de sortie (16).

6. Appareil selon la revendication 5, **caractérisé par** des moyens communs de commande à distance pour agir sur le sens ou la direction de rotation du ou des disque(s) d'épandage (1, 21) et sur les moyens pour bloquer la ou les ouverture(s) de sortie (16) de telle manière que lorsque le sens de rotation d'un disque d'épandage est tel que la partie d'épandage radialement intérieure (8) est tout à fait à l'arrière, l'ouverture de sortie associée (16) sera alors bloquée.

7. Appareil selon la revendication 6 et du type comprenant au moins un écran de limitation ou une garde mobile entre une position active dans laquelle il/elle constitue une obstruction pour au moins une partie du matériau projeté vers l'extérieur depuis un disque d'épandage et une position passive dans laquelle il/elle ne constitue pas une telle obstruction, **caractérisé en ce que** les moyens communs de commande à distance sont également adaptés à déplacer le ou les écran(s), ou la ou les garde(s) de limitation entre lesdites deux positions de telle manière que lorsque le sens ou la direction de rotation du disque d'épandage associé est celui/celle mentionné(e) dans la revendication 6, l'écran ou la garde de limitation associé(e) sera dans ladite position active.

8. Pale d'épandage (5) destinée à être utilisée dans un appareil selon l'une quelconque des revendications 3 à 7 et du type comprenant :
a) une partie de base (6) au moyen de laquelle elle peut être fixée sur un disque d'épandage (1, 21) dans l'appareil, et
b) une partie d'épandage (8, 9) qui se projette vers le haut depuis la partie de base (6) pendant le fonctionnement et présente une étendue qui n'est pas inconsidérable dans la direction axiale et la direction tangentielle,
**caractérisée en ce que** :
c) la partie d'épandage (8, 9) comprend une partie radialement intérieure (8) et une partie radialement extérieure (9), l'extrémité radialement extérieure (13) de la partie radialement intérieure (8) étant décalée de telle manière, dans la direction radiale et dans la direction tangentielle par rapport à l'extrémité radialement intérieure (14) de la partie radialement extérieure (9), qu'il se forme entre elles une ouverture (15) à travers laquelle le matériau fluide peut passer.
